# EUROPÄISCHE PATENTSCHRIFT

(11) **EP 3 986 660 B1**
(45) Veröffentlichungstag und Bekanntmachung des Hinweises auf die Patenterteilung: **14.05.2025**
(21) Anmeldenummer: 20734877.2
(22) Anmeldetag: 19.06.2020
(51) Int. Cl.: B23K 26/0622, B23K 26/06, B23K 26/24, B23K 26/26, B23K 26/324, B23K 103/00

(54) **VERFAHREN UND VORRICHTUNG ZUM VERSCHWEISSEN EINES TRANSPARENTEN WERKSTÜCK MIT EINEM WEITEREN WERKSTÜCK, MIT EINER MODULIERUNG DER ENERGIE DES LASERSTRALES IN DIE SCHWEISSZONE**
METHOD AND DEVICE FOR WELDING A TRANSPARENT WORKPIECE TO ANOTHER WORKPIECE, WITH MODULATION OF THE ENERGY OF THE LASER BEAM INTO THE WELDING ZONE
PROCÉDÉ ET DISPOSITIF DE SOUDAGE D'UNE PIÈCE TRANSPARENTE À UNE AUTRE PIÈCE, AVEC MODULATION DE L'ÉNERGIE DU FAISCEAU LASER DANS LA ZONE DE SOUDAGE

(30) Priorität: 21.06.2019 DE 102019116798
(43) Veröffentlichungstag der Anmeldung: 27.04.2022
(73) Patentinhaber: TRUMPF Laser- und Systemtechnik SE, 71254 Ditzingen (DE)
(72) Erfinder: ZIMMERMANN, Felix, 71254 Ditzingen (DE); HECKER, Sebastian, 88682 Salem (DE)
(74) Vertreter: Trumpf Patentabteilung
(86) Internationale Anmeldenummer: PCT/EP2020/067164
(87) Internationale Veröffentlichungsnummer: WO 2020/254616

(56) Entgegenhaltungen:
- DE-A1- 102007 063 456
- DE-A1- 102009 049 750
- DE-A1- 102010 038 554
- US-A- 5 073 687
- US-A1- 2008 080 570

## Beschreibung

### Technisches Gebiet

Die vorliegende Erfindung betrifft ein Verfahren und eine Vorrichtung zum Verschweißen eines transparenten Werkstücks mit einem weiteren Werkstück entsprechend dem Oberbegriff der Ansprüche 1 und 11 (siehe z.B. DE 10 2010 038554 A1).

### Stand der Technik

Zum Bearbeiten von Werkstücken und insbesondere zum Verschweißen zweier Werkstücke miteinander ist es bekannt, die jeweiligen Werkstücke in einer Prozesszone mittels eines Laserstrahls zu beaufschlagen, um auf diese Weise in der durch den Laserstrahl beaufschlagten Prozesszone durch Energieabsorption eine Schmelze zu erzeugen, welche nach dem Erstarren eine Schweißnaht zwischen den beiden Werkstücken ausbildet.

Dabei ist es insbesondere bekannt, zur Herstellung einer Verschweißung eines transparenten Werkstücks mit einem nicht transparenten Werkstück oder zum Verschweißen zweier transparenter Werkstücke die Prozesszone zwischen die beiden Werkstücke zu legen. Dies wird darüber erreicht, dass der bearbeitende Laserstrahl so in die Prozesszone fokussiert wird, dass der Energieeintrag im Bereich der Prozesszone am höchsten ist, um entsprechend zwischen den beiden Werkstücken in der Prozesszone eine Schmelze und dann nach dem Erstarren der Schmelze eine Schweißnaht bereitzustellen. Dabei tritt der bearbeitende Laserstrahl entsprechend durch eines der transparenten Werkstücke hindurch und wird erst auf der dem Eintrittsbereich gegenüberliegenden Seite des Werkstücks in die Prozesszone fokussiert.

Der bearbeitende Laserstrahl wird dabei durch entsprechende Optiken und eine damit einhergehende Strahlformung in das Material eines der Werkstücke, in beide Werkstücke und/oder in den Bereich einer Grenzfläche zwischen den beiden aneinander anliegenden Werkstücken fokussiert, um in diesem Bereich dann die jeweilige Prozesszone auszubilden.

Beim Bearbeiten von Werkstücken und insbesondere beim Verschweißen zweier Werkstücke miteinander kommt es aufgrund des starken lokalen Energieeintrags durch den fokussierten Laserstrahl in der Prozesszone zu hohen Temperaturen, welche in den umliegenden Materialbereichen nicht vorliegen. Entsprechend führt die in der Prozesszone für die Bearbeitung - beispielsweise für die Herstellung einer Schweißnaht - notwendige Wärme zu Temperaturspannungen gegenüber den umgebenden Materialbereichen. Entsprechend kann es zu Spannungen und/oder Rissen in dem Material im Bereich der Schweißnaht kommen, was in einer Reduzierung der Qualität der gefügten Materialien resultieren kann.

Dies gilt gleichermaßen auch für andere lokale Bearbeitungsverfahren, bei denen lokale Volumen- oder Oberflächenmodifikationen durchgeführt werden. Auch bei diesen weiteren Bearbeitungsverfahren ist die Form und Größe der lokalen Volumen- oder Oberflächenmodifikationen limitiert durch die zulässigen Temperaturspannungen in den umliegenden Materialbereichen.

Die auftretenden Temperaturspannungen, insbesondere während des eigentlichen Wärmeeintrags, wirken entsprechend limitierend auf die Größe und Form der in der Prozesszone einzubringenden Modifikation. Mit anderen Worten sind die bekannten Schweißverfahren limitiert dadurch, dass die über den lokalen Wärmeeintrag eingebrachten Temperaturspannungen ein bestimmtes Maß nicht überschreiten sollen, welches zu einer strukturellen Veränderung des Materials, zu Rissen oder zu einer niedrigen Qualität der Schweißnaht oder der miteinander gefügten Werkstücke führen könnten.

US 2008 / 0080570 A1 offenbart ein Verfahren und ein System für eine gepulste Laserquelle zum Bereitstellen geformter optischer Wellenfronten.

US 5 073 687 A offenbart ein Verfahren und eine Vorrichtung zum Bearbeiten eines Print Boards mit einem Laserstrahl.

DE 10 2009 049 750 A1 offenbart ein Verfahren und eine Vorrichtung zum Schneiden von Material mittels eines modulierten Laserstrahls.

DE 10 2007 063 456 A1 offenbart ein Verfahren zum Schweißverbinden von Werkstücken aus einem metallischen Werkstoff mit einem Laserstrahl.

### Darstellung der Erfindung

Ausgehend von dem bekannten Stand der Technik ist es eine Aufgabe der vorliegenden Erfindung, die bekannten, mit gepulsten Laserstrahlen durchgeführten Bearbeitungsverfahren zur Bearbeitung von Werkstücken weiterzubilden.

Diese Aufgabe wird durch ein Verfahren zum Verschweißen eines transparenten Werkstücks mit einem weiteren Werkstück entsprechend Anspruch 1, und eine Vorrichtung zum Verschweißen eines transparenten Werkstücks mit einem weiteren Werkstück entsprechend Anspruch 11 gelöst. Vorteilhafte Weiterbildungen ergeben sich aus den abhängigen Ansprüchen, der vorliegenden Beschreibung sowie den beigefügten Figuren.

Durch die zeitliche Modulation der durch den Laserstrahl in die Prozesszone eingekoppelten Energie können die in dem Material erzeugten Temperaturspannungen gegenüber einer ohne diese Modulation durchgeführten Bearbeitung reduziert werden. Bei den Spannungen können sowohl sogenannte transiente Spannungen, die während des und kurz nach dem eigentlichen Bearbeiten auftreten, wenn das Material noch erwärmt ist, sowie permanente Spannungen reduziert werden. Durch die zeitliche Modulation der durch den Laserstrahl in die Prozesszone eingekoppelten Energie kann die lokale Wärmeakkumulation so moduliert werden, dass eine homogenere Einkopplung der Energie in die Prozesszone erreicht wird. Damit kann unter anderem erreicht werden, dass die mittlere Energie, mittels welcher ohne das Auftreten von unerwünschten Rissen im Material geschweißt werden kann, erhöht werden kann, so dass sich daraus eine verbesserte Effizienz der Bearbeitung ergeben kann. Damit können auch die Limitierungen bezüglich der Größe und Form der in das Material eingebrachten Modifikation, mittels welcher rissfrei bearbeitet werden kann, verschoben werden.

Durch die Modulation der in die Prozesszone eingekoppelten Energie kann erreicht werden, dass die im Material des Werkstücks stattfindenden Wärmediffusionsprozesse besser dazu ausgenutzt werden können, gleichzeitig sowohl einen effizienteren Energieeintrag und damit eine Verkürzung der Bearbeitungszeit zu erreichen, als auch dabei eine Reduktion von Spannungen im Material zu erreichen.

Je nach gewählter Modulationsfrequenz kann dabei, im Vergleich zu einer modulationsfreien Bearbeitung, eine homogenere Energieeinkopplung in die Prozesszone erreicht werden.

Bei der Verwendung von ultrakurzen Laserpulsen wird die in das Material eingebrachte Modifikation entweder durch einen Überlapp der jeweiligen Laserpulse im Material erzeugt, oder aber durch ein räumlich separiertes Auftreffen der Laserpulse in dem Material.

Beim Beaufschlagen des Materials mit einem hohen Überlapp der Laserpulse wird durch eine zeitliche Modulation der in die Prozesszone eingekoppelten Energie entsprechend eine Modulation des Grades der Wärmeakkumulation im Material erreicht. Die zu verwendenden Modulationen hängen insbesondere auch von der typischen Wärmediffusionszeit des Materials ab. Reicht die Zeit bis zum nächsten Laserpuls am gleichen beziehungsweise am überlappenden Ort nicht dazu aus, die über den Laserpuls eingetragene Wärme innerhalb des Materiales ausreichend zu diffundieren, so findet eine stark lokale Wärmeakkumulation statt, wenn der nächste Laserpuls in dem Überlappungsbereich auftritt. Über eine zeitliche Modulation der eingekoppelten Energie kann entsprechend erreicht werden, dass die typische Wärmediffusionszeit des Materials so angewendet wird, dass das Auftreten von transienten Spannungen und permanenten Spannungen im Material reduziert wird, da die Diffusion der Wärme in andere Bereiche vorteilhaft zur Reduktion der Spannungen eingesetzt werden kann. Mit anderen Worten wird die Wärme im Werkstück vorteilhaft verteilt, um auf diese Weise das unvorteilhafte Auftreten hoher Temperaturgradienten im Material des Werkstücks zu reduzieren und damit gleichzeitig das Auftreten von Temperaturspannungen zu reduzieren.

Beim Verwenden eines überlappenden Einbringens der Laserpulse in das Material wird entsprechend durch die zeitliche Modulation der eingekoppelten Energie eine Verbesserung des Bearbeitungsergebnisses erreicht.

Werden die jeweiligen Laserpulse hingegen als räumlich separierte Spots in das Werkstück eingebracht, so kann durch eine entsprechende zeitliche Modulation der eingekoppelten Energie beispielsweise eine definierte Rissführung erreicht werden, welche beispielsweise zum Trennen eines Werkstücks, beispielsweise zum Trennen von Glas, erwünscht sein kann.

Bevorzugt wird die durch den Laserstrahl in die Prozesszone eingekoppelte Energie durch eine Modulation des zeitlichen Abstands zwischen den Laserpulsen und/oder zwischen den Pulszügen zeitlich moduliert, bevorzugt bei gleichbleibender Energie je Laserpuls und/oder Pulszug, wobei die Repetitionsrate bevorzugt zwischen 10kHz und 1GHz moduliert wird.

Bevorzugt wird die durch den Laserstrahl in die Prozesszone eingekoppelte Energie durch eine Modulation der Pulsdauer der Laserpulse zeitlich moduliert, wobei die Pulsdauer bevorzugt zwischen 0,1ps und 20ps moduliert wird.

Bevorzugt wird die durch den Laserstrahl in die Prozesszone eingekoppelte Energie durch eine Modulation der mittleren Energie und/oder der Energieverteilung aufeinanderfolgender Pulse und/oder Pulszüge zeitlich moduliert, bevorzugt bei gleichbleibendem zeitlichem Abstand zwischen den aufeinanderfolgenden Laserpulsen und/oder Pulszügen.

Bevorzugt wird die durch den Laserstrahl in die Prozesszone eingekoppelte Energie durch eine Pulspause zeitlich moduliert, bevorzugt durch eine Pulspause von 0,05ms bis 5ms.

Bevorzugt wird die Pulsenergie und/oder die Pulsdauer und/oder die Länge eines Pulszugs durch eine Steuereinheit einer den gepulsten Laserstrahl erzeugenden Laserstrahlquelle zeitlich moduliert, wobei die Modulation bevorzugt über einen externen Signalgeber angesteuert wird.

Bevorzugt wird die durch den gepulsten Laserstrahl in die Prozesszone eingekoppelte Energie mittels eines Shutters und/oder eines akusto-optischen Modulators moduliert und/oder mittels eines akusto-optischen Deflektors (AOD) abgelenkt und so die in die Prozesszone eingebachte Energie moduliert. Die Ablenkung und Modulation mittels eines AOD betrifft bevorzugt Modulationsfrequenzen größer als 1MHz.

Bevorzugt wird die durch den gepulsten Laserstrahl in die Prozesszone eingekoppelte Energie mittels einer zeitlichen Modulation von Aberrationen, bevorzugt mittels eines deformierbaren Spiegels und/oder mittels einer TAG-Linse ("tunable acoustic gradient"-Linse), erzeugt. Bei einer TAG-Linse ist eine Flüssigkeit vorgesehen, die durch akusto-optische Modulation eine zeitlich modulierte Brechungsindexverteilung aufweist, so dass dadurch die Brennweite der Linse zeitlich moduliert wird.

Bevorzugt wird zur Bearbeitung des mindestens einen Werkstücks ein Laserstrahl mit einer Bessel-Strahlform verwendet.

Zur Bearbeitung des mindestens einen Werkstücks wird bevorzugt ein gepulster Laserstrahl verwendet, der in einer Prozesszone mindestens zwei longitudinal zueinander und/oder lateral zueinander versetzte Strahlprofile aufweist, bevorzugt mindestens zwei longitudinal zueinander und/oder lateral zueinander versetzte Gaußprofile.

Bevorzugt ist ein Axicon und/oder ein diffraktiv optisches Element und/oder ein räumlicher Lichtmodulator zwischen der Laserquelle und der Prozesszone angeordnet.

### Kurze Beschreibung der Figuren

Bevorzugte weitere Ausführungsformen der Erfindung werden durch die nachfolgende Beschreibung der Figuren näher erläutert. Dabei zeigen:
- Figur 1: eine schematische Darstellung eines zeitlich in seiner Energie modulierten, gepulsten Laserstrahls, wobei die Energie der einzelnen Laserpulse gegenüber den folgenden Laserpulsen in Form eines Sägezahns zeitlich moduliert ist;
- Figur 2: eine weitere schematische Darstellung, eines zeitlich in seiner Energie modulierten, gepulsten Laserstrahls, wobei die Energie der einzelnen Laserpulse gegenüber den folgenden Laserpulsen sinusförmig (bzw. sin²ⁿ mit n=natürliche Zahl) zeitlich moduliert ist;
- Figur 3: eine weitere schematische Darstellung eines zeitlich in seiner Energie modulierten, gepulsten Laserstrahls, wobei die Energie der einzelnen Laserpulse gegenüber den folgenden Laserpulsen rechteckförmig zeitlich moduliert ist;
- Figur 4: eine schematische Darstellung eines zeitlich mit einer hohen Frequenz (im kHz-Bereich) in seiner Energie modulierten, gepulsten Laserstrahls, wobei die einzelnen in ihrer Energie modulierten Laserpulse einer überlagerten Modulation der mittleren Energie der einzelnen Pulszüge unterliegen, sowie ein Mikroskopbild eines mit einem solchen Laserstrahl bearbeiteten Werkstück;
- Figur 5: eine schematische Darstellung eines in seiner mittleren Energie modulierten Laserstrahls mit einer langsamen Modulation der Pulszüge aber ohne die in Figur 4 vorliegende mit einer hohen Frequenz im kHz Bereich durchgeführte Modulation der Energie, sowie ein Mikroskopbild eines mit einem solchen Laserstrahl bearbeiteten Werkstück;
- Figur 6: eine schematische Darstellung einer Draufsicht der in ein Werkstück eingebrachten Spots eines gepulsten Laserstrahls sowie darunter eine schematische Darstellung der zeitlich modulierten Energie der jeweiligen Laserpulse, wobei die Energie des gesamten Pulszugs der sinusförmig zeitlich moduliert ist;
- Figur 7: eine schematische Darstellung der Modulation des zeitlichen Abstandes zwischen den Laserpulsen eines gepulsten Laserstrahls;
- Figur 8: eine schematische Darstellung der Modulation des zeitlichen Abstands zwischen Laserpulsen eines gepulsten Lasers bei gleichzeitiger zeitlicher Modulation der Energie des gepulsten Laserstrahls, wobei die Energie des gesamten Pulszugs in Form eines Sägezahns zeitlich moduliert ist;
- Figur 9: eine schematische Darstellung der zeitlichen Modulation der Pulsdauern der Laserpulse bei gleichzeitiger zeitlicher Modulation der Energie der einzelnen Laserpulse;
- Figur 10: eine schematische Darstellung der zeitlichen Modulation der Pulsdauern der Laserpulse bei gleichzeitiger zeitlicher Modulation der Energie der einzelnen Laserpulse in einer weiteren Variante;
- Figur 11: eine schematische Darstellung der in ein Werkstück durch die einzelnen Laserpulse eingebrachten Spots und darunter schematisch die Darstellung einer Modulation des zeitlichen Abstandes zwischen den Laserpulsen des gepulsten Laserstrahls;
- Figur 12: eine schematische Darstellung der über die Laserpulse in ein Werkstück eingebrachten Spots und darunter schematisch die Darstellung einer Modulation des zeitlichen Abstandes zwischen den Laserpulsen des gepulsten Laserstrahls sowie darunter eine schematische Darstellung der relativen Vorschubgeschwindigkeit zwischen Werkstück und Fokus des Laserstrahls;
- Figur 13: eine schematische Darstellung eines zeitlich in seiner Energie modulierten, gepulsten Laserstrahls, wobei die Energie der Laserpulse sinusförmig moduliert ist und eine Pulspause in die Modulation einbezogen ist;
- Figur 14: eine schematische Darstellung eines Aufbaus einer Vorrichtung zum Verschweißen zweier Werkstücke mittels eines gepulsten Laserstrahls.

### Detaillierte Beschreibung bevorzugter Ausführungsbeispiele

Im Folgenden werden bevorzugte Ausführungsbeispiele anhand der Figuren beschrieben. Dabei werden gleiche, ähnliche oder gleichwirkende Elemente in den unterschiedlichen Figuren mit identischen Bezugszeichen versehen, und auf eine wiederholte Beschreibung dieser Elemente wird teilweise verzichtet, um Redundanzen zu vermeiden.

Zum Verschweißen eines transparenten Werkstücks mit einem weiteren Werkstück, insbesondere zum Verschweißen zweier transparenter Werkstücke, wird entsprechend der Erfindung ein ultrakurz gepulster Laserstrahl verwendet, welcher entsprechend eine Prozesszone des Werkstückes bzw. der beiden Werkstücke beaufschlagt. Dazu wird der gepulste Laserstrahl typischerweise mittels einer Optik in die Prozesszone hinein fokussiert, um entsprechend eine besonders hohe Energiedichte im Bereich der Prozesszone und gleichzeitig einen möglichst geringen Energieeintrag in die umliegenden Materialbereiche zu erreichen.

Die Energie der Laserpulse des gepulsten Laserstrahls wird von dem in der Prozesszone vorliegenden Material teilweise absorbiert und führt entsprechend zu einem Anstieg der Temperatur in der Prozesszone. Mit jedem Laserpuls wird der Prozesszone entsprechend neue Energie zugeführt, die zu einer erneuten Temperaturerhöhung des Materials in der Prozesszone führt. Gleichzeitig wird die Wärme aus der Prozesszone durch Wärmediffusionsprozesse an umliegende Volumenbereiche des Materials abgegeben, so dass es bei einer Berücksichtigung des typischen Wärmediffusionskoeffizienten des Materials des Werkstücks bei nacheinander auf die Prozesszone auftreffenden Laserpulsen entweder zu einer Temperaturerhöhung, zu einer gleichbleibenden Temperatur in der Prozesszone oder zu einer Temperatursenkung bei einer bereits vorliegenden hohen Temperatur kommen kann. Dies hängt jeweils davon ab, ob die Temperatur durch die Laserpulse schneller angehoben werden kann, als sie durch die Wärmediffusionsprozesse im Material aus der Prozesszone heraus diffundiert.

Ob in der Prozesszone eine Wärmeakkumulation oder eine Wärmediffusion stattfindet, wird dementsprechend im Wesentlichen von der Frequenz der aufeinanderfolgenden Laserpulse und der in das Material eingebrachten Energie der Laserpulse bestimmt. Bei einer Bearbeitung, bei welcher eine Relativgeschwindigkeit zwischen dem Werkstück und dem bearbeitenden Laserstrahl vorliegt, muss auch ein räumlicher Überlapp (N>1) der Laserspots vorliegen, wobei Fokusgröße (D), Repetitionsrate (R) und Vorschub (V) den Pulsüberlapp (N=D*R/V) definieren.

Um die Ausbildung von transienten oder permanenten Spannungen innerhalb des Werkstücks zu reduzieren, wird nun vorgeschlagen, die in die Prozesszone durch den Laserstrahl eingekoppelte Energie zeitlich zu modulieren.

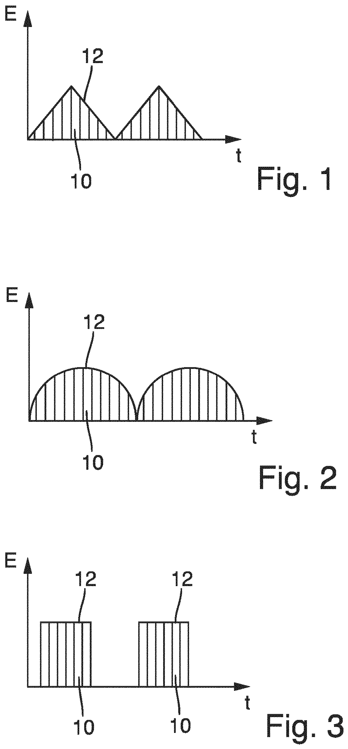

In Figur 1 ist schematisch eine Variante der zeitlichen Modulation der Energie der einzelnen Laserpulse beziehungsweise Pulsgruppen des gepulsten Laserstrahls, mit welchen die Prozesszone beaufschlagt wird, gezeigt. Dabei ist die Laserenergie (E) über die Zeit (t) aufgetragen. Die einzelnen Laserpulse 10 beziehungsweise Pulsgruppen sind schematisch durch die Striche angedeutet und werden von einer Einhüllenden 12 begrenzt.

Die als Striche dargestellten Laserpulse 10 können im Prinzip auch Pulsgruppen von Laserpulsen veranschaulichen. Dabei ist die zeitliche Modulation der Energie der aufeinanderfolgenden Laserpulse beziehungsweise der Laserpulsgruppen von Bedeutung. Mit anderen Worten handelt es sich um eine Inter-Puls Modulation der Energie der Laserpulse oder Laserpulsgruppen.

In Figur 1 ist entsprechend eine zeitliche Modulation der Energie der einzelnen Laserpulse 10 gegenüber den folgenden Laserpulsen in Form einer Sägezahnfunktion gezeigt, die durch die Einhüllende 12 dargestellt ist.

Die zeitliche Modulation der Energie der einzelnen Laserpulse 10 gegenüber den folgenden Laserpulsen kann entweder durch die Laserquelle selbst, oder durch ein zwischen der Laserquelle und der Prozesszone geschaltetes optisches Element erreicht werden, welches eine zeitliche Modulation der Energie des gepulsten Laserstrahls herbeiführt. Dies gilt für sämtliche hier offenbarten Ausführungsformen und Modulationsmuster.

In Figur 2 ist eine schematische Darstellung einer zeitlichen Modulation der Laserenergie E der einzelnen Laserpulse 10 über die Zeit hinweg dargestellt, bei welcher die Einhüllende 12 der Energien aufeinanderfolgender Laserpulse beziehungsweise von Laserpulsgruppen eine quasi sinusförmige Modulation zeigt.

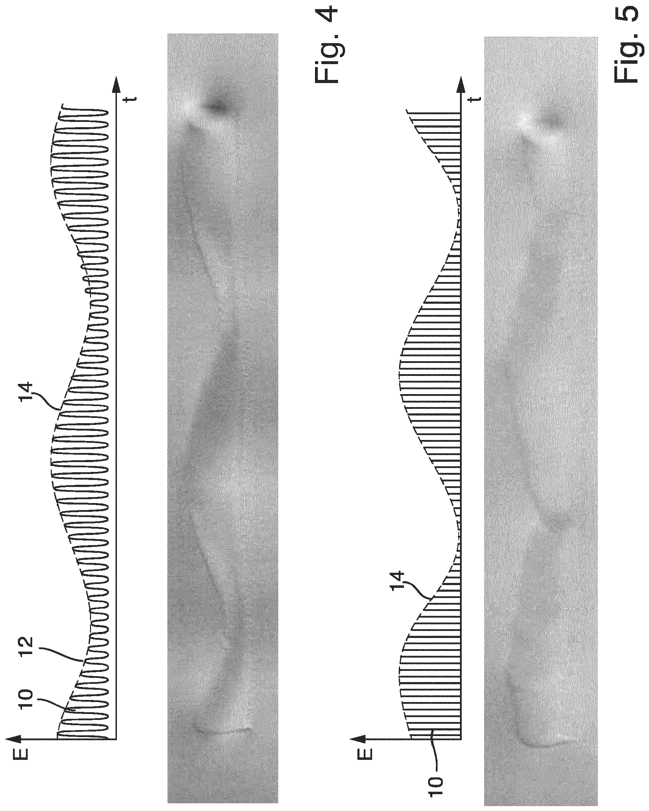

In Figur 3 ist schematisch eine zeitliche Modulation der Laserpulse 10 gezeigt, bei welcher die Einhüllende 12 der Energien aufeinanderfolgender Laserpulse eine quasi rechteckförmige Modulation zeigt. Figur 4 zeigt im oberen Teil der Figur eine zeitliche Modulation der Laserenergie E der Laserpulse 10 mit einer schnellen, sinusförmigen Einhüllenden 12, die beispielsweise mit einer Modulationsfrequenz zwischen 10Hz und 10GHz vorgesehen sein kann. Die Einhüllende 12 ist von einer ebenfalls sinusförmigen Modulation 14 überlagert. Die Frequenz der überlagerten Modulation 14 ist in dieser Ausführungsform konstant und kann beispielsweise in einem Bereich von 0,01Hz bis 2,5kHz liegen.

Die Frequenz der langsamen Modulation kann auf die Länge einer bearbeiteten Linie abgestimmt werden. Beispielsweise kann 10mm Linienlänge mit 10mm/s geschweißt werden und dabei eine langsame 1Hz Modulation 14 verwendet werden.

In einer alternativen Ausführungsform kann die Modulation 14 aber auch eine variierende Frequenz aufweisen.

Durch die in der Figur 4 gezeigte entsprechende Ausprägung der überlagerten Modulation 14 variiert die mittlere Energie und/oder die Energieverteilung von aufeinanderfolgenden Laserpulsen 10 beziehungsweise von aufeinanderfolgenden Laserpulsgruppen, die durch die Einhüllende 12 gezeigt ist.

Unter dem Diagramm der Laserenergie über die Zeit ist ein Mikroskopbild eines Querschnitts (in dem Bild wurde der Laserstrahl von oben eingestrahlt und die entstehende Prozesszone von links nach rechts verfahren) der mittels dieser die Einhüllende 12 überlagerten Modulation 14 in ein Werkstück eingeschriebenen Materialmodifikation gezeigt. Es ist zu erkennen, dass die Materialmodifikation der zeitlich modulierten Energie der Laserpulse folgt.

In der Figur 5 ist zum Vergleich nun ein Diagramm von Laserpulsen 10 gezeigt, die lediglich über eine langsame Modulation 14 in ihrer Energie verändert werden, nicht hingegen über die schnelle Modulation wie in Figur 4. Darunter ist die über eine langsame Modulation 14 in ein Werkstück eingeschriebene Materialmodifikation in einem Mikroskopbild eines Querschnitts zu erkennen, aus welchem ersichtlich ist, dass die Materialmodifikation der zeitlich modulierten Energie der Laserpulse nicht besonders genau folgt. Die entstehende Materialmodifikation ist im Vergleich recht inhomogen ausgebildet.

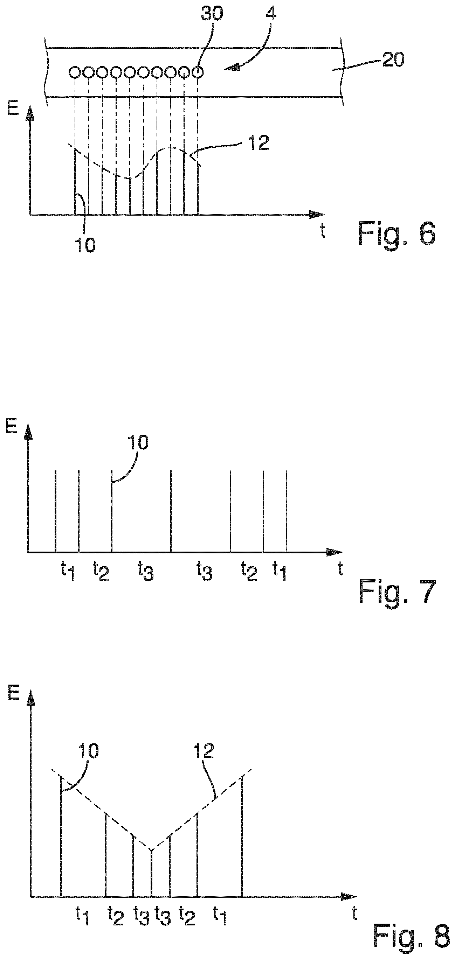

In Figur 6 ist schematisch in der oberen Darstellung ein Werkstück 20 gezeigt, in welchem Laserspots 30 eingezeichnet sind, welche sich zu einem geringen Teil überlappen. Darunter ist schematisch eine Darstellung der einzelnen Laserpulse 10 gezeigt, welche zeitlich in ihrer Energie so moduliert sind, dass in jeweils nebeneinanderliegenden Laserspots 30 in dem Material 20 jeweils eine unterschiedliche Energie in das Werkstück und damit auch in die Prozesszone 4 im Werkstück eingekoppelt werden kann.

In Figur 7 ist schematisch eine Modulation des zeitlichen Abstandes zwischen den einzelnen Laserpulsen 10 gezeigt. Dabei ist zwischen dem ersten und dem zweiten Laserpuls beispielsweise eine Zeit t1, zwischen dem zweiten und dem dritten Laserpuls eine längere Zeit t2 und zwischen dem dritten und dem vierten Laserpuls eine noch längere Zeit t3 vorgesehen, wobei dann wieder die gleiche Zeit t3 bis zum folgenden Laserpuls, dann wieder Zeit t2 und dann Zeit t1 verwendet wird usw. Entsprechend findet hier eine Modulation des zeitlichen Abstandes zwischen den jeweiligen Laserpulsen 10 statt.

In Figur 8 ist eine weitere schematische Darstellung der Modulation des zeitlichen Abstands zwischen den einzelnen Laserpulsen 10 gezeigt, wobei gleichzeitig noch eine zeitliche Modulation der Laserenergie E vorgenommen wird, die der Einhüllenden 12 folgt. Dabei nimmt die Laserenergie E der Laserpulse 10 hin zu den kürzeren zeitlichen Abständen zwischen den Laserpulsen 10 ab und zu den längeren zeitlichen Abständen hin wieder zu.

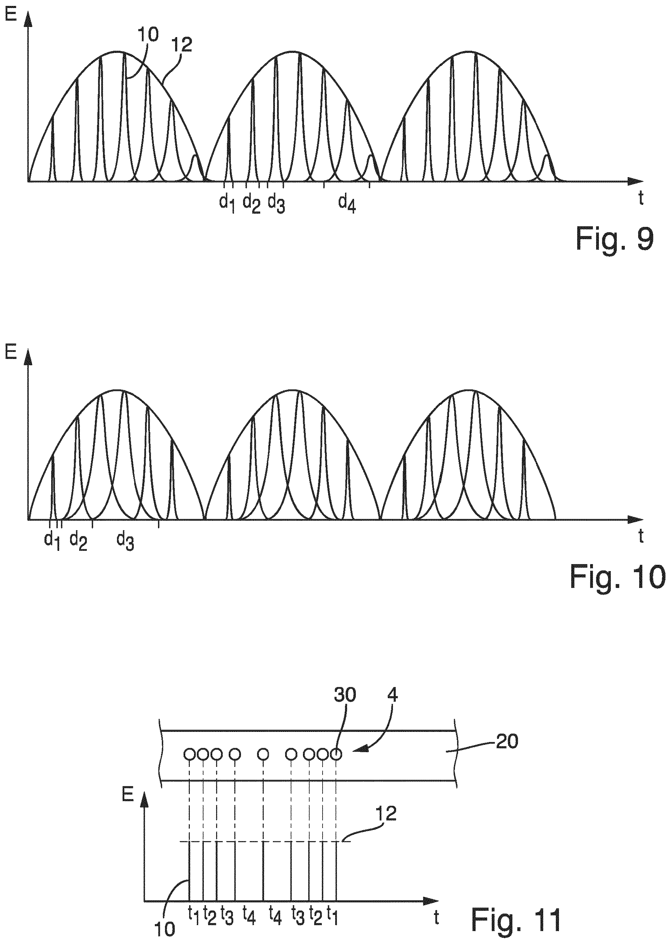

In Figur 9 ist eine Ausführungsform gezeigt, in welcher die Pulsdauer d1, d2, d3, d4 der Laserpulse 10 zeitlich moduliert wird - beispielsweise zwischen 0.1 und 20 ps. Hier steigt die Pulsdauer der Laserpulse innerhalb eines Pulszugs an.

Gleichzeitig kann auch die Repetitionsfrequenz zwischen 10kHz und 1GHz moduliert werden. Es kann auch die Energie der jeweiligen Laserpulse so zeitlich moduliert werden, dass sich die Einhüllende 12 ergibt, die eine quasi sinusförmige Funktion zeigt.

In Figur 10 ist eine der Figur 9 ähnliche Ausführungsform gezeigt, wobei aber die Pulsdauer d1, d2, d3 hier zunächst zur Mitte der Einhüllenden 12 hin ansteigt, um dann wieder abzufallen. Es verlässt den Rahmen der vorliegenden Erfindung nicht, wenn die Pulsdauer abweichend von Fig. 9 und Fig. 10 moduliert wird.

In Figur 11 ist eine weitere schematische Darstellung eines Werkstücks 20 gezeigt, bei welchem wiederum in einer Prozesszone 4 Laserspots 30 gezeigt sind, welche hier aber unterschiedliche Abstände voneinander aufweisen, wobei es Laserspots 30 gibt, welche einander überlappen und wobei es Laserspots 30 gibt, welche voneinander separiert sind.

Aus der darunterliegenden schematischen Darstellung der einzelnen Laserpulse 10 über die Zeit hinweg ist zu erkennen, dass der zeitliche Abstand zwischen jeweils zwei Laserpulsen hier moduliert ist, wobei vier unterschiedliche zeitliche Abstände zwischen den jeweiligen Laserpulsen 10 vorgesehen sind. Auf diese Weise kann die in die Prozesszone 4 mittels des Laserstrahls in den jeweiligen Laserspots 30 eingekoppelte Energie zeitlich moduliert werden, wobei dies gleichzeitig auch zu einer räumlichen Modifikation der in die Prozesszone 4 eingekoppelten Energie führt.

In diesem Ausführungsbeispiel ist sowohl die Vorschubgeschwindigkeit V zwischen dem Laserstrahl und dem Werkstück, als auch die von jedem Laserpuls 10 in das Werkstück 20 beziehungsweise in die Prozesszone 4 des Werkstücks 20 eingekoppelte Energie gleich groß.

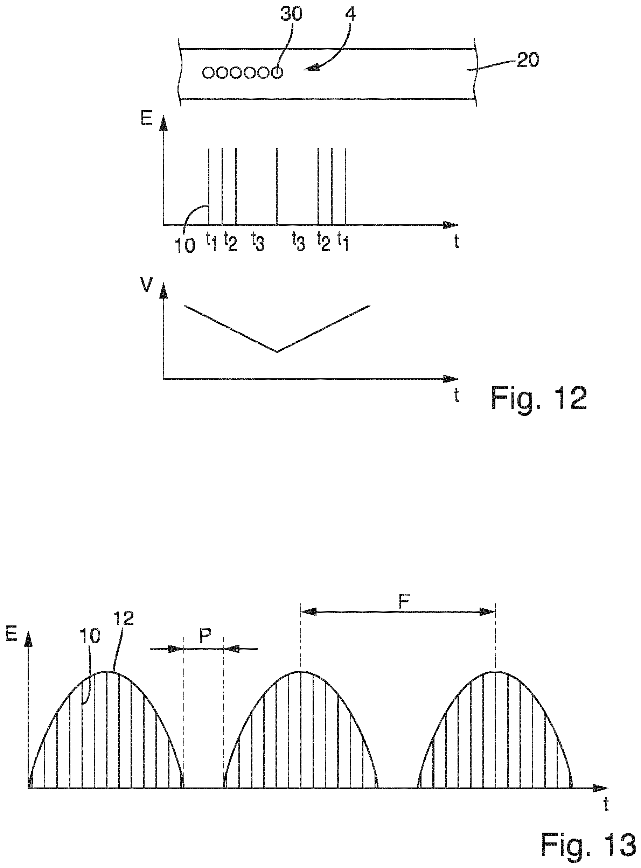

In Figur 12 ist eine weitere Darstellung eines schematisch angedeuteten Werkstücks 20 gezeigt, bei welchem einzelne Laserspots 30 in eine Prozesszone 4 eingebracht werden. Die Laserspots 30 weisen in dem Werkstück 20 gleiche Abstände voneinander auf. In dem darunterliegenden Diagramm sind die einzelnen Laserpulse 10 noch einmal in ihrer zeitlichen Abfolge gezeigt, wobei der Abstand zwischen zwei aufeinanderfolgenden Laserpulsen 10 jeweils zeitlich moduliert ist. Schematisch gezeigt sind hier drei unterschiedliche zeitliche Abstände zwischen den Laserpulsen, t1, t2, t3.

Darunter gezeigt ist eine variable relative Vorschubgeschwindigkeit V zwischen dem Laserstrahl und dem Werkstück 20 wobei die Vorschubgeschwindigkeit geringer ist in den Bereichen, in welchen ein längerer zeitlicher Abstand zwischen zwei aufeinanderfolgenden Laserpulsen 10 vorgesehen ist. Daraus ergibt sich entsprechend, dass, trotz des unterschiedlichen zeitlichen Abstandes zwischen den einzelnen Laserpulsen 10, die Laserspots 30 in dem Werkstück 20 dennoch in gleichen Abständen zueinander angeordnet sind.

Die in die Prozesszone 4 über den Laserstrahl eingekoppelte Energie wird dahingehend zeitlich moduliert, dass in den Bereichen, in welchen der Abstand zwischen den aufeinanderfolgenden Laserpulsen größer ist, entsprechend das Werkstück 20 länger Zeit dafür hat, die Wärme aus der Prozesszone 4 in das umliegenden Material abzuleiten. Dementsprechend findet eine zeitliche Modulation der in die Prozesszone eingekoppelte Energie unter Ausnutzung der Wärmediffusionszeit des Materials 20 statt.

In Figur 13 ist eine weitere schematische Darstellung eines in die Prozesszone einzukoppelnden gepulsten Laserstrahls gezeigt, bei welchem die einzelnen Laserpulse 10 bezüglich ihrer Laserenergie E zeitlich moduliert sind, wobei die Modulation eine Einhüllende 12 ausbildet, die eine quasi sinusförmige Funktion beschreibt, wobei die sinusförmige Funktion eine feste Modulationsfrequenz F aufweist. Zwischen den einzelnen Pulsgruppen ist jeweils eine Pulspause P vorgesehen.

Die Pulspause P kann dabei zwischen 0.05 ms und 5 ms lang sein. Die Pulspause P wird dabei in die zeitliche Modulation der Energie der Laserpulse mit einbezogen.

Fokussiert man ultrakurze Laserpulse in das Volumen oder auf die Oberfläche transparenter Materialien, z.B. Quarzglas, führt die im Fokus vorliegende hohe Intensität zu nichtlinearen Absorptionsprozessen wodurch, in Abhängigkeit der Laserparameter, verschiedene Materialmodifikationen induziert werden können. Durch Bewegen der Fokusposition (scannen des Laserfokus bzw. der Probe) können so ausgedehnte Bereiche modifiziert werden wobei Fokusgröße (D), Repetitionsrate (R) und Vorschub (V) den Pulsüberlapp (N=D*R/V) definieren. Hierin werden sowohl Prozessregime mit räumliche separierten (N<1) als auch überlappenden (N>1) Pulsen bzw. Pulszügen (sogenannte Bursts) adressiert. Unter hohem Überlapp kann es zu Wärmeakkumulation kommen, wenn der zeitliche Pulsabstand kürzer als die typische Wärmediffusionszeit des Glases ist. Dadurch erhöht sich die Temperatur im Fokusbereich von Puls zu Puls, wodurch es zum lokalen Aufschmelzen des Glases kommen kann. Platziert man die Modifikation in die Grenzfläche zweier Gläser, generiert die abkühlende Schmelze eine stabile Verbindung beider Proben.

Sowohl bei Bearbeitung mit Vorschub als auch bei stationärer Bearbeitung kann die zeitliche Modulation (z.B. sägezahn-, sinus- oder rechteck-förmig) der eingekoppelten Pulsenergie die in das Material induzierten (transiente und permanente) Spannungen reduzieren. Unter Wärmeakkumulation und hohem Pulsüberlapp erhöht sich dadurch die mittlere Leistung (und damit die Größe der eingebrachten Modifikation) bei der rissfrei geschweißt werden kann. Je nach Modulationsfrequenz ist es dabei möglich eine homogene(re) Energieeinkopplung (typischerweise bei Modulationsfrequenzen von 100Hz bis ca. 5kHz) im Vergleich zur modulationsfreien Bearbeitung zu erzeugen oder auch dem Modifikationsprozess eine Dynamik aufzuprägen (typischerweise bei Modulationsfrequenzen >5kHz).

Ebenso kann in einem Prozessregime räumlich separierter Spots eine Energiemodulation von aufeinander folgenden Pulsen (bzw. Pulszügen) eine definierte Rissführung, die z.B. zum Glastrennen gewünscht ist, begünstigen.

Die Modulation kann dabei verschiedene zeitlich periodische Verläufe, insbesondere Modulationsamplituden, -anstiege oder auch positive und negative Dämpfung aufweisen. Die Modulation ist dabei unabhängig von der verwendeten Strahlform, wobei insbesondere nicht Gaußförmige Strahlformen (z.B. Bessel) oder auch Strahlformen aus mehreren (longitudinal und/oder lateral) versetzen Gauß-Profilen verwendet werden bzw. der Modulation unterliegen können. Die Modulationsparameter (z.B. Form, Frequenz, Amplitude etc.) können zudem im Prozess verändert werden.

Darüber hinaus sind weitere Ansätze denkbar, um die eingekoppelte Energie zu modulieren. Diese umfassen die zeitlich schnelle Änderung der Laserrepetitionsrate wodurch z.B. der Grad der Wärmeakkumulation (im Regime hohen Überlapps) verändert werden kann. Ebenso könnte die Pulsdauer periodisch schnell verändert werden, z.B. ausgehend von 1 ps zu 50 ps und zurück. Dadurch sinkt (bei sonst gleichen Parametern) die Pulsintensität ggf. auch unterhalb der Modifikationsschwelle wodurch sich ebenso eine Modulation der eingekoppelten Energie ergibt.

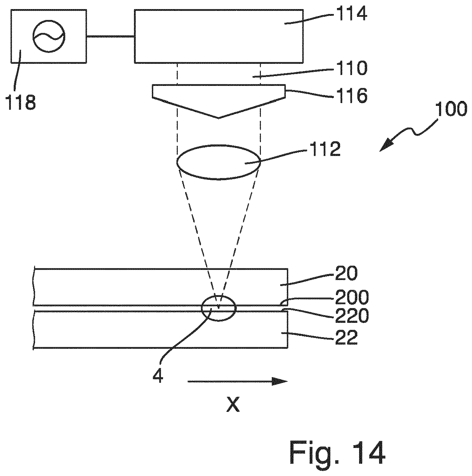

Figur 14 ist eine schematische Darstellung einer Vorrichtung 100 zum Bearbeiten eines Werkstücks, wobei hier ein erstes Werkstück 20 und ein zweites Werkstück 22 vorgesehen sind, wobei das erste Werkstück 20 eine Unterseite 200 und das zweite Werkstück 22 eine Oberseite 220 aufweist, die direkt aneinander anliegen. Die Unterseite 200 des oberen Werkstücks 20 und die Oberseite 220 des unteren Werkstücks 22 bilden eine Ebene aus, in welcher eine Prozesszone 4 ausgebildet werden soll.

Ein gepulster Laserstrahl 110 wird in einer Laserquelle 114 bereitgestellt, welcher über eine Optik 112 in die Prozesszone 4 fokussiert wird. Die beiden Werkstücke 20, 22 werden in einer Vorschubrichtung X relativ zum Laserstrahl 110 bewegt.

Der Laserstrahl 110 wird bereits in der Laserquelle 114 bezüglich des zeitlichen Abstandes zwischen den Laserpulsen und/oder zwischen den Pulszügen moduliert. An der Laserquelle 114 kann der Laserstrahl 110 auch bezüglich der jeweiligen Pulsenergie eines jeden Leserpulses 10 zeitlich moduliert werden. Hierzu kann bevorzugt ein interner oder aber externer Signalgeber 118 vorgesehen sein, mittels welchem die Modulation der Pulsenergie angesteuert wird.

Die Modulation der durch den gepulsten Laserstrahl 110 in die Prozesszone 4 eingekoppelten Energie kann auch mittels eines Shutters und/oder eines akusto-optischen Modulators und/oder eines akusto-optischen Deflektors erreicht werden, der dann ebenfalls bevorzugt von einem internen oder externen Signalgeber angesteuert wird.

In einer Weiterbildung kann die durch den gepulsten Laserstrahl 110 in die Prozesszone 4 eingekoppelte Energie mittels einer zeitlichen Modulation von Aberrationen, bevorzugt mittels eines deformierbaren Spiegels und/oder mittels einer TAG-Linse, moduliert werden.

Zur Erzeugung eines Bessel-Strahls kann ein Axicon 116 und/oder ein diffraktiv optisches Element (DOE) und/oder ein räumlicher Lichtmodulator (SLM - spatial light modulator) in dem Strahlengang vorgesehen sein. Die hierin beschriebenen Verfahren zur Bearbeitung mindestens eines Werkstücks können alle bevorzugt mit einem Gauß-Strahl oder einem Bessel-Strahl durchgeführt werden.

Zur Bearbeitung des mindestens einen Werkstücks 20, 22 kann auch ein gepulster Laserstrahl 110 verwendet wird, der in der Prozesszone 4 mindestens zwei longitudinal zueinander und/oder lateral zueinander versetzte Strahlprofile aufweist, bevorzugt mindestens zwei longitudinal zueinander und/oder lateral zueinander versetzte Gaußprofile.

Vorteilhaft sind dabei die selbstheilenden Eigenschaften der Bessel-Strahlen, gemäß welchen bei einer teilweisen Störung oder Blockierung an einem Punkt der Ausbreitungsachse, zum Beispiel durch ein Streuzentrum, sie ihre ursprüngliche Form aber später in der Ausbreitungsrichtung wiedergewinnen. Damit sind Bessel-Strahlen besonders zur Materialbearbeitung transparenter Werkstücke geeignet, bei welchen eine Materialbearbeitung in einer Prozesszone stattfinden soll, die erst nach dem Durchtritt des Laserstrahls durch das transparente Material hindurch auf einer der Eintrittsseite gegenüberliegenden Seite des transparenten Werkstücks stattfinden soll. Durch die selbstheilenden Eigenschaften der Bessel-Strahlen haben etwaige im Material des Werkstücks vorliegende Störungen keinen oder nur einen geringen Einfluss auf das Bearbeitungsergebnis. Entsprechend umfasst die Vorrichtung beispielsweise einen Ultrakurzpulslaser, gegebenenfalls zusätzliche strahlformende Elemente (SLM/DOE) und/oder Scanner (insbesondere Mikro-Scanner), eine Fokussieroptik (z.B. Mikroskopobjektiv) und eine Proben- und/oder Strahlpositionierung (z.B. Positioniersystem zur Probenbewegung). Die zeitliche Modulation der eingekoppelten Energie kann mit verschiedenen Techniken realisiert werden:
Beispielsweise kann die Pulsenergie direkt durch die Lasersteuereinheit zeitlich moduliert werden. Die zeitliche Modulation der Pulsenergie kann auch über einen externen Signalgeber (z.B. Funktionengenerator) der Lasersteuereinheit vorgegeben werden oder durch ein externes Gerät (z.B. shutter, elektro/akusto-optischer Modulator) realisiert werden.

Die zeitliche Modulation kann indirekt durch zeitlich periodische Aberrationen, z.B. mittels deformierbarem Spiegel oder TAG-Linse erzeugt werden.

Weiterhin kann die Modulation der Repetitionsrate beispielsweise mittels akusto-optischen Modulatoren realisiert werden.

Alternativ kann die Laserpulsdauer auch intern/extern moduliert werden.

### Bezugszeichenliste

- 10: Laserpuls
- 12: Einhüllende
- 14: überlagerte Modulation
- 100: Vorrichtung zum Bearbeiten mindestens eines Werkstücks
- 110: Laserstrahl
- 112: Optik
- 114: Laserquelle
- 116: Axicon
- 118: externer Signalgeber
- 20: Werkstück
- 22: zweites Werkstück
- 200: Unterseite Werkstück
- 220: Oberseite zweites Werkstück
- 30: Laserspot
- 4: Prozesszone
- E: Energie
- t: Zeit
- t1: zeitlicher Abstand
- t2: zeitlicher Abstand
- t3: zeitlicher Abstand
- t4: zeitlicher Abstand
- d1: Pulsdauer
- d2: Pulsdauer
- d3: Pulsdauer
- d4: Pulsdauer
- V: Vorschubgeschwindigkeit
- P: Pulspause
- F: Modulationsfrequenz
- X: Vorschubrichtung

## Patentansprüche

1. Verfahren zum Verschweißen eines transparenten Werkstücks (20) mit einem weiteren Werkstück (22), umfassend das Beaufschlagen einer Prozesszone (4) der Werkstücke (20, 22) mit einem Ultrakurzpulslaserstrahl (110),
**dadurch gekennzeichnet, dass**
die in die Prozesszone (4) durch den Ultrakurzpulslaserstrahl (110) eingekoppelte Energie zeitlich moduliert wird,
wobei der Ultrakurzpulslaserstrahl (110) relativ zu den Werkstücken (22, 20) verschoben wird,
wobei die Laserpulse räumlich überlappend in die Prozesszone abgegeben werden, wodurch eine Modulation des Grades der Wärmeakkumulation in den Werkstücken (20, 22) erreicht wird, und
wobei durch die zeitliche Modulation der durch den Ultrakurzpulslaserstrahl (110) in die Prozesszone eingekoppelten Energie die in dem Material der Werkstücke (20, 22) erzeugten Temperaturspannungen gegenüber einer ohne diese Modulation durchgeführten Bearbeitung reduziert werden.

2. Verfahren gemäß Anspruch 1, **dadurch gekennzeichnet, dass** die durch den Ultrakurzpulslaserstrahl (110) in die Prozesszone (4) eingekoppelte Energie durch eine Modulation des zeitlichen Abstands (t1, t2, t3, t4) zwischen den Laserpulsen (10) und/oder zwischen den Pulszügen zeitlich moduliert wird, bevorzugt bei gleichbleibender Energie je Laserpuls und/oder Pulszug, wobei die Repetitionsrate bevorzugt zwischen 10kHz und 1GHz moduliert wird.

3. Verfahren gemäß Anspruch 1 oder 2, **dadurch gekennzeichnet, dass** die durch den Ultrakurzpulslaserstrahl (110) in die Prozesszone (4) eingekoppelte Energie durch eine Modulation der Pulsdauer (d1, d2, d3) der Laserpulse (10) zeitlich moduliert wird, wobei die Pulsdauer bevorzugt zwischen 0,1ps und 20ps moduliert wird.

4. Verfahren gemäß einem der vorstehenden Ansprüche, **dadurch gekennzeichnet, dass** die durch den Ultrakurzpulslaserstrahl (110) in die Prozesszone (4) eingekoppelte Energie durch eine, bevorzugt bei 0,01Hz bis 2,5kHz liegende, Modulation der Energieverteilung und/oder der Energie aufeinanderfolgender Pulse (10) und/oder der Pulszüge zeitlich moduliert wird, bevorzugt bei gleichbleibendem zeitlichem Abstand zwischen den aufeinanderfolgenden Laserpulsen (10) und/oder Pulszügen.

5. Verfahren gemäß einem der vorstehenden Ansprüche, **dadurch gekennzeichnet, dass** die durch den Ultrakurzpulslaserstrahl (110) in die Prozesszone eingekoppelte Energie durch eine Pulspause (P) zeitlich moduliert wird, bevorzugt durch eine Pulspause von 0,05ms bis 5ms.

6. Verfahren nach einem der vorstehenden Ansprüche, **dadurch gekennzeichnet, dass** die Pulsenergie und/oder die Pulsdauer (d1, d2, d3) und/oder die Länge eines Pulszugs durch eine Steuereinheit einer den Ultrakurzpulslaserstrahl (110) erzeugenden Laserstrahlquelle (114) zeitlich moduliert wird, wobei die Modulation bevorzugt über einen internen und/oder externen Signalgeber (118) angesteuert wird.

7. Verfahren nach einem der vorstehenden Ansprüche, **dadurch gekennzeichnet, dass** die durch den gepulsten Ultrakurzpulslaserstrahl (110) in die Prozesszone (4) eingekoppelte Energie mittels eines Shutters und/oder eines akusto-optischen Modulators und/oder eines akusto-optischen Deflektors moduliert wird.

8. Verfahren nach einem der vorstehenden Ansprüche, **dadurch gekennzeichnet, dass** die durch den gepulsten Ultrakurzpulslaserstrahl in die Prozesszone eingekoppelte Energie mittels einer zeitlichen Modulation von Aberrationen, bevorzugt mittels eines deformierbaren Spiegels und/oder mittels einer TAG-Linse, erzeugt werden.

9. Verfahren gemäß einem der vorstehenden Ansprüche, **dadurch gekennzeichnet, dass** zur Bearbeitung der Werkstücke ein Ultrakurzpulslaserstrahl (110) mit einer Bessel-Strahlform verwendet wird.

10. Verfahren gemäß einem der vorstehenden Ansprüche, **dadurch gekennzeichnet, dass** zur Bearbeitung der Werkstücke (20, 22) ein gepulster Ultrakurzpulslaserstrahl (110) verwendet wird, der in der Prozesszone (4) mindestens zwei longitudinal zueinander und/oder lateral zueinander versetzte Strahlprofile aufweist, bevorzugt mindestens zwei longitudinal zueinander und/oder lateral zueinander versetzte Gaußprofile.

11. Vorrichtung (100) zum Verschweißen eines transparenten Werkstücks (20) mit einem weiteren Werkstück (22), umfassend eine Laserquelle (114) zur Erzeugung eines Ultrakurzpulslaserstrahls (110) und eine Optik zur Beaufschlagung einer Prozesszone (4) in den Werkstücken (20, 22) mit dem Ultrakurzpulslaserstrahl (110),
**dadurch gekennzeichnet, dass**
die Laserquelle (114) dazu eingerichtet ist, den Ultrakurzpulslaserstrahl (110) zeitlich zu modulieren,
wobei die Vorrichtung (100) dazu eingerichtet ist, den Ultrakurzpulslaserstrahl (110) relativ zu den Werkstücken (22, 20) zu verschieben,
sodass die Laserpulse räumlich überlappend in die Prozesszone abgegeben werden, wodurch eine Modulation des Grades der Wärmeakkumulation in den Werkstücken (20, 22) erreicht wird, und
sodass durch die zeitliche Modulation der durch den Ultrakurzpulslaserstrahl (110) in die Prozesszone eingekoppelten Energie die in dem Material der Werkstücke (20, 22) erzeugten Temperaturspannungen gegenüber einer ohne diese Modulation durchgeführten Bearbeitung reduziert werden.

12. Vorrichtung (100) gemäß Anspruch 11, **dadurch gekennzeichnet, dass** die Laserquelle (114) mittels eines internen und/oder externen Signalgebers (118) zeitlich moduliert wird.

13. Vorrichtung (100) gemäß Anspruch 11 oder 12, **dadurch gekennzeichnet, dass** ein Axicon (116) und/oder ein diffraktiv optisches Element und/oder ein akusto-optischer Modulator und/oder ein akusto-optischer Deflektor zwischen der Laserquelle (114) und der Prozesszone (4) angeordnet ist.

## Claims

1. A method for welding a transparent workpiece (20) to another workpiece (22), comprising applying an ultrashort pulse laser beam (110) to a process zone (4) of the workpieces (20, 22),
**characterized in that**
the energy coupled into the process zone (4) by the ultrashort pulse laser beam (110) is temporally modulated,
wherein the ultrashort pulse laser beam (110) is displaced relative to the workpieces (22, 20),
wherein the laser pulses are emitted into the process zone with a spatial overlap, whereby a modulation of the degree of heat accumulation in the workpieces (20, 22) is achieved, and
wherein the temperature stresses generated in the material of the workpieces (20, 22) are reduced compared to a machining operation carried out without this modulation, by the temporal modulation of the energy coupled into the process zone by the ultrashort pulse laser beam (110).

2. The method in accordance with claim 1, **characterized in that** the energy coupled into the process zone (4) by the ultrashort pulse laser beam (110) is temporally modulated by modulating the time interval (t1, t2, t3, t4) between the laser pulses (10) and/or between the pulse trains, preferably with a constant energy per laser pulse and/or pulse train, wherein the repetition rate is preferably modulated between 10kHz and 1GHz.

3. The method in accordance with claim 1 or 2, **characterized in that** the energy coupled into the process zone (4) by the ultrashort pulse laser beam (110) is temporally modulated by modulating the pulse duration (d1, d2, d3) of the laser pulses (10), wherein the pulse duration is preferably modulated between 0.1 ps and 20 ps.

4. The method in accordance with one of the preceding claims, **characterized in that** the energy coupled into the process zone (4) by the ultrashort pulse laser beam (110) is temporally modulated by a modulation, preferably at 0.01 Hz to 2.5 kHz, of the energy distribution and/or the energy of consecutive pulses (10) and/or the pulse trains, preferably with a constant time interval between the consecutive laser pulses (10) and/or pulse trains.

5. The method in accordance with one of the preceding claims, **characterized in that** the energy coupled into the process zone by the ultrashort pulse laser beam (110) is temporally modulated by a pulse pause (P), preferably by a pulse pause of 0.05 ms to 5 ms.

6. The method according to one of the preceding claims, **characterized in that** the pulse energy and/or the pulse duration (d1, d2, d3) and/or the length of a pulse train is/are temporally modulated by a control unit of a laser beam source (114) generating the ultrashort pulse laser beam (110), wherein the modulation is preferably controlled via an internal and/or external signal generator (118).

7. The method according to one of the preceding claims, **characterized in that** the energy coupled into the process zone (4) by the pulsed ultrashort pulse laser beam (110) is modulated by means of a shutter and/or an acousto-optical modulator and/or an acousto-optical deflector.

8. The method according to one of the preceding claims, **characterized in that** the energy coupled into the process zone by the pulsed ultrashort pulse laser beam is generated by means of a temporal modulation of aberrations, preferably by means of a deformable mirror and/or by means of a TAG lens.

9. The method in accordance with one of the preceding claims, **characterized in that** an ultrashort pulse laser beam (110) with a Bessel beam shape is used to process the workpieces.

10. The method in accordance with one of the preceding claims, **characterized in that** a pulsed ultrashort pulse laser beam (110) is used to process the workpieces (20, 22), which has at least two beam profiles that are longitudinally and/or laterally offset with respect to one another in the process zone (4), preferably at least two Gaussian profiles that are longitudinally and/or laterally offset with respect to one another.

11. An apparatus (100) for welding a transparent workpiece (20) to another workpiece (22), comprising a laser source (114) for generating an ultrashort pulse laser beam (110) and an optical system for applying the ultrashort pulse laser beam (110) to a process zone (4) in the workpieces (20, 22),
**characterized in that**
the laser source (114) is configured to temporally modulate the ultrashort pulse laser beam (110),
wherein the apparatus (100) is configured to displace the ultrashort pulse laser beam (110) relative to the workpieces (22, 20),
so that the laser pulses are emitted into the process zone with a spatial overlap, whereby a modulation of the degree of heat accumulation in the workpieces (20, 22) is achieved, and
so that the temperature stresses generated in the material of the workpieces (20, 22) are reduced compared to a machining operation carried out without this modulation, by the temporal modulation of the energy coupled into the process zone by the ultrashort pulse laser beam (110).

12. The apparatus (100) in accordance with claim 11, **characterized in that** the laser source (114) is temporally modulated by means of an internal and/or external signal generator (118).

13. The apparatus (100) in accordance with claim 11 or 12, **characterized in that** an axicon (116) and/or a diffractive optical element and/or an acousto-optical modulator and/or an acousto-optical deflector is arranged between the laser source (114) and the process zone (4).

## Revendications

1. Procédé de soudage d'une pièce transparente (20) avec une autre pièce (22), comprenant l'exposition d'une zone de traitement (4) des pièces (20, 22) à un faisceau laser à impulsions ultra-courtes (110),
**caractérisé en ce que**
l'énergie couplée dans la zone de traitement (4) par le faisceau laser à impulsions ultra-courtes (110) est modulée temporellement,
dans lequel le faisceau laser à impulsions ultra-courtes (110) est déplacé relativement aux pièces (22, 20),
dans lequel les impulsions laser sont délivrées avec un chevauchement spatial dans la zone de traitement, ce qui permet d'obtenir une modulation du degré d'accumulation thermique dans les pièces (20, 22), et
dans lequel la modulation temporelle de l'énergie couplée par le faisceau laser à impulsions ultra-courtes (110) dans la zone de traitement réduit les contraintes thermiques générées dans le matériau des pièces (20, 22) par rapport à un traitement réalisé sans cette modulation.

2. Procédé selon la revendication 1, **caractérisé en ce que** l'énergie couplée par le faisceau laser à impulsions ultra-courtes (110) dans la zone de traitement (4) est modulée temporellement par une modulation de l'intervalle temporel (t1, t2, t3, t4) entre les impulsions laser (10) et/ou entre les trains d'impulsions, de préférence avec une énergie constante par impulsion laser et/ou par train d'impulsions, dans lequel la fréquence de répétition est de préférence modulée entre 10 kHz et 1 GHz.

3. Procédé selon la revendication 1 ou 2, **caractérisé en ce que** l'énergie couplée par le faisceau laser à impulsions ultra-courtes (110) dans la zone de traitement (4) est modulée temporellement par la modulation de la durée d'impulsion (d1, d2, d3) des impulsions laser (10), dans lequel la durée d'impulsion est de préférence modulée entre 0,1 ps et 20 ps.

4. Procédé selon l'une des revendications précédentes, **caractérisé en ce que** l'énergie couplée par le faisceau laser à impulsions ultra-courtes (110) dans la zone de traitement (4) est modulée temporellement par une modulation de la répartition d'énergie et/ou de l'énergie des impulsions successives (10) et/ou des trains d'impulsions, de préférence avec un intervalle temporel constant entre les impulsions laser (10) et/ou les trains d'impulsions successifs, celle-ci étant de préférence située entre 0,01 Hz et 2,5 kHz.

5. Procédé selon l'une des revendications précédentes, **caractérisé en ce que** l'énergie couplée par le faisceau laser à impulsions ultra-courtes (110) dans la zone de traitement est modulée temporellement par une pause entre les impulsions (P), de préférence par une pause entre les impulsions comprise entre 0,05 ms et 5 ms.

6. Procédé selon l'une des revendications précédentes, **caractérisé en ce que** l'énergie d'impulsion et/ou la durée d'impulsion (d1, d2, d3) et/ou la longueur d'un train d'impulsions est modulée temporellement par une unité de commande d'une source de faisceau laser (114) générant le faisceau laser à impulsions ultra-courtes (110), dans lequel la modulation est de préférence commandée par un générateur de signal interne et/ou externe (118).

7. Procédé selon l'une des revendications précédentes, **caractérisé en ce que** l'énergie couplée par le faisceau laser à impulsions ultra-courtes (110) dans la zone de traitement (4) est modulée au moyen d'un obturateur et/ou d'un modulateur acousto-optique et/ou d'un déflecteur acousto-optique.

8. Procédé selon l'une des revendications précédentes, **caractérisé en ce que** l'énergie couplée par le faisceau laser à impulsions ultra-courtes dans la zone de traitement est générée au moyen d'une modulation temporelle des aberrations, de préférence au moyen d'un miroir déformable et/ou au moyen d'une lentille TAG.

9. Procédé selon l'une des revendications précédentes, **caractérisé en ce qu'**un faisceau laser à impulsions ultra-courtes (110) avec une forme de faisceau de type Bessel est utilisé pour le traitement des pièces.

10. Procédé selon l'une des revendications précédentes, **caractérisé en ce qu'**un faisceau laser à impulsions ultra-courtes (110) pulsé est utilisé pour le traitement des pièces (20, 22), lequel présente dans la zone de traitement (4) au moins deux profils de faisceau décalés longitudinalement l'un par rapport et/ou latéralement l'un par rapport à l'autre, de préférence au moins deux profils gaussiens décalés longitudinalement l'un par rapport et/ou latéralement l'un par rapport à l'autre.

11. Dispositif (100) pour le soudage d'une pièce transparente (20) avec une autre pièce (22), comprenant une source laser (114) pour générer un faisceau laser à impulsions ultra-courtes (110) et une optique pour exposer une zone de traitement (4) dans les pièces (20, 22) à un faisceau laser à impulsions ultra-courtes (110),
**caractérisé en ce que**
la source laser (114) est configurée pour moduler temporellement le faisceau laser à impulsions ultra-courtes (110),
dans lequel le dispositif (100) est configuré pour déplacer le faisceau laser à impulsions ultra-courtes (110) relativement aux pièces (22, 20),
de sorte que les impulsions laser soient délivrées avec un chevauchement spatial dans la zone de traitement, ce qui permet d'obtenir une modulation du degré d'accumulation thermique dans les pièces (20, 22), et
de sorte que la modulation temporelle de l'énergie couplée par le faisceau laser à impulsions ultra-courtes (110) dans la zone de traitement réduise les contraintes thermiques générées dans le matériau des pièces (20, 22) par rapport à un traitement réalisé sans cette modulation.

12. Dispositif (100) selon la revendication 11, **caractérisé en ce que** la source laser (114) est modulée temporellement au moyen d'un générateur de signal interne et/ou externe (118).

13. Dispositif (100) selon la revendication 11 ou 12, **caractérisé en ce qu'**un axicon (116) et/ou un élément optique diffractif et/ou un modulateur acousto-optique et/ou un déflecteur acousto-optique est disposé entre la source laser (114) et la zone de traitement (4).
